# EUROPEAN PATENT APPLICATION

(11) **EP 2 228 757 A1**
(43) Date of publication of application: **15.09.2010**
(21) Application number: 09154669.7
(22) Date of filing: 09.03.2009
(51) Int. Cl.: G06Q 10/00, G08G 1/14, G08G 1/123

(54) **System and method for obtaining a route for restocking vehicles of a vehicle fleet**

(71) Applicant: Ruiz de Villa Robert, Aleix, 08025 Barcelona (ES)
(72) Inventor: Ruiz de Villa Robert, Aleix, 08025 Barcelona (ES)
(74) Representative: ZBM Patents

(57) **Abstract**

The invention relates to a method for obtaining a route for restocking vehicles of a vehicle fleet, said fleet comprising a plurality of parking lots, each lot comprising a plurality of parking slots, and further comprising a restocking vehicle for transporting vehicles of the fleet, the method comprising step (a) of obtaining the amount of parking lots of the vehicle fleet; step (b) of obtaining the location of said parking lots; step (c) of obtaining the arrival and departure frequency of each parking lot; step (d) of obtaining the available parking slots of each parking lot; step (e) of calculating the time to denial of service of each parking lot, based on the amount of available parking slots of each parking lot and the arrival and departure frequency of each parking lot; step (f) of calculating a plurality of possible routes of the restocking vehicle for restocking vehicles, the routes comprising the parking lots, using the obtained locations of each parking lot; step (g) of calculating the denial of service of the parking lots comprised in the calculated routes, over a predetermined period of time; step (h) of calculating the global denial of service for each calculated route, using the calculated denial of service of the parking lots and the calculated time to denial of service of each parking lot; step (i) of selecting a route for restocking vehicles from the calculated routes, among the ones which have a global denial of service below a predetermined level of denial of service.

## Description

The invention relates to a method for obtaining a route for restocking vehicles of a vehicle fleet, wherein said fleet comprises a plurality of parking lots, each lot comprising a plurality of parking slots, and further comprising a restocking vehicle for transporting vehicles of the fleet, which is the one who drives following the obtained route for restocking vehicles. More specifically, a route is obtained which enables to decrease the amount of denial of service for the users of the vehicle fleet, by restocking the vehicles in an optimum way.

Also, the invention comprises a system for obtaining a route for restocking vehicles of a vehicle fleet.

### BACKGROUND ART

The services for using a vehicle fleet with multiple users are being used in several cities nowadays, wherein a fleet of vehicles such as, normally, bicycles, are disposed in a plurality of parking lots, each one in a parking slot, and by means of a direct payment or an identification, a user is allowed to use this vehicle, taking it from its origin parking slot, and locating it (after a determined period of time) in a second parking slot which may or may not be the same origin parking slot, or from the same parking lot.

This way, these systems are commonly used by users for travelling from one point of a city to another, the vehicles being relocated whenever a user finishes his travelling with said vehicle.

Obviously, during the day, certain parking lots are used more as destination lots and others will be used as origin lots, and therefore, the need arises of relocating vehicles from parking lots to cope with the demand of vehicles.

This relocation or restocking is performed by simply transporting with a vehicle such as a van or a truck, a plurality of bicycles from, for example, parking lots where the amount of arrivals is higher than the amount of departures, to parking lots where the amount of departures is higher than the amount of arrivals, where, therefore, there might be more free parking slots unused. Also, the restocking may be performed because a parking lot is empty and several departures from that parking lot are expected, so when restocking vehicles from other parking lots to that one, the users will have more available bicycles. Both restockings are performed with the objective to not denying a user the service of parking or taking away a vehicle from a specific parking lot.

But, depending on which routes the transporting vehicles perform, and the amount of bicycles retrieved or left at the parking lots, a better service may be performed and less denial of services would occur.

### SUMMARY OF THE INVENTION

Therefore, it is an object of the invention to provide, according to a first aspect of the invention, a method for obtaining a route for restocking vehicles of a vehicle fleet, said fleet comprising a plurality of parking lots, each lot comprising a plurality of parking slots, and further comprising a restocking vehicle for transporting vehicles of the fleet, the method comprising the steps of:
a) Obtaining the amount of parking lots of the vehicle fleet;
b) Obtaining the location of said parking lots;
c) Obtaining the arrival and departure frequency of each parking lot;
d) Obtaining the the available parking slots of each parking lot;
e) Calculating the time to denial of service of each parking lot, based on the amount of available parking slots of each parking lot and the arrival and departure frequency of each parking lot;
f) Calculating a plurality of possible routes of the restocking vehicle for restocking vehicles, the routes comprising the parking lots, using the obtained locations of each parking lot;
g) Calculating the denial of service of the parking lots comprised in the calculated routes, over a predetermined period of time;
h) Calculating the global denial of service for each calculated route, using the calculated denial of service of the parking lots and the calculated time to denial of service of each parking lot;
i) Selecting a route for restocking vehicles from the calculated routes, among the ones which have a global denial of service below a predetermined level of denial of service.

Obtaining the amount of parking lots and their locations enables the possibility of situating them in a map and, therefore, knowing the distances between each parking lots, for a future calculation of any route.

Furthermore, the time to denial of service is a period of time during which a parking lot will be able to give service. When this time period has ended, the parking lot will not be able to give a service, either because the lot is full of vehicles and there is no free parking slots for a user to park a vehicle, or because the lot is empty and there are no vehicles in any parking lot, and therefore a user cannot pick-up and use a vehicle from the parking lot. Either way, if no action is performed on a parking lot, after the time of denial of service, it would end up with a denial of service.

The arrival and departure frequencies are two parameters which may measure an estimated frequency in which users arrive to a parking lot to park the vehicle (arrivals) or the users pick-up a vehicle to leave with it (departures). This parameters may be based on simulations or, for example, based on historic data from previous functioning of the vehicle fleet.

For example, if a parking lot has a high arrival frequency and a low departure frequency, it is more likely that when the time to denial of service has ended, the parking lot will deny service in such a way that there are no free parking slots for a user to park a vehicle, since the amount of arrivals is normally higher than the amount of departures during a certain period of time.

Afterwards, the calculation of a plurality of possible routes for restocking the vehicles of the vehicle fleet is performed, based on the geographic location of the parking lots which are comprised in each route. This calculation may be done in a wide range of possible ways, based on, for example, a road/street map of the zone where the parking lots are located, and a calculation of a plurality of routes with certain orders of the parking lots. Therefore, there is a possibility that a plurality of routes may comprise the same parking lot order, but, for example, different routes, going through different streets.

Then, the second calculated parameter is the denial of service, which measures the amount of denied service to the users after the time of denial of service has expired, in a given parking lot, during a certain period of time. For example, it can be calculated as the percentatge of failure of service within a period of time, said period of time beginning whenever a parking lot is not able to give service. In the same way, the denial of service may be caculated for a case where there is demand for parking vehicles and the parking lot is full, or the case wherein there is a demand for taking away vehicles and the parking lot is empty.

For example, a denial of service may be, more specifically, measured as the number of users which could not use the service over a period of time.

The last parameter is the global denial of service, which measures the total denial of service of each calculated possible route for restocking vehicles. This way, taking into account the individual time to denial of service of each parking lot, for each route, an estimated time of arrival of the vehicle for restocking at each parking lot may be obtained, and therefore, also taking into account the denial of service for each parking lot, a global parameter comprising an overall representation of the denial of service of all the parking lots of the route combined may be obtained.

More specifically, the global denial of service may be, for example, the total number of users which haven't been able to use the service (either taking or leaving a vehicle) during the period of time from the moment which the restocking vehicle starts the route until it ends it.

Finally, the selection of the possible route is based on selecting among the routes which have the lower global denial of service. These routes don't have to be the ones which the restocking vehicle can perform faster, or the shortest ones, but the ones that, globally, leave a lowest number of unsatisfied users, that is, users that haven't been able to use the service (either taking or leaving a vehicle). This way, the use of the vehicle fleet is optimized and more vehicles are available to the users of the fleet.

According to a preferred embodiment of the invention, the time to denial of service is calculated based on parameters corresponding to the statistical usage, from a prior period of time, of the vehicles for each parking lot.

This way, the time to denial of service may be calculated based on previous usage during a previous period of time. For example, a historical account of the use of the vehicle fleet during the past three days may give an estimation for calculating a time to denial of service of certain parking lots. If, for example, the calculation is performed during summer time, and the parking lot is located on a place near a business center where lots of people are not attending their jobs because it's holiday season, it could be the case where the time to denial of service is longer, since the usage of the parking lot is lower than usual (both arrivals and departures), based on the previous days historical account.

According to a further embodiment of the invention, the time to denial of service is calculated based on parameters corresponding to a prediction of the statistical usage of the vehicles for each parking lot, over a future period of time.

Also, the time to denial of service may be calculated based on a prediction of usage, for example, if no historical account exists because the vehicle fleet is first used a certain location, and no previous use of the fleet has been done.

According to an embodiment, the method further comprises step j) of obtaining an estimated time for transporting at least one vehicle, from at least one parking lot to another, with the restocking vehicle, and the calculating of the global denial of service of step h) is further based on the obtained estimated time for transporting.

The estimated time for transporting at least one vehicle from any parking lot to another may be obtained through a plurality of methods, from an simple estimation using a route between two parking lots in a point-to-point way, to a calculation wherein the specific street map is used, which directions are allowed for the transporting vehicle to take, how many street lights there are in the exact route from one parking lot to another, the level of traffic congestion along the route, etc.

According to a further embodiment, the calculation of the plurality of possible routes of step f) is further based on the initial number of vehicles transported by the restocking vehicle before starting the route.

According to another embodiment, the calculation of the plurality of possible routes of step f) is further based on the vehicles of the fleet left and picked-up in each parking lot during each route.

This way, a more accurate estimation of how many vehicles the restocking vehicle will transport is obtained, and an approach closer to reality will be obtained of the amount of bicycles that the restocking vehicle will be able of disposing and picking up.

More specifically, according to another embodiment of the invention, the calculation of the time to denial of service of step e) is specifically performed by using a Monte Carlo method, assigning an exponential distribution to the probability corresponding to the arrival and departure frequency.

The arrival and departure frequency depends on the arrivals and departures of the users which are using a vehicle, and therefore they are related to a probability of when a user might arrive or depart with a vehicle. Normally, a probability distribution function belonging to an exponential family (that is, which comprises an exponential in its definition) may be the more suitable option to describe the behaviour of the arrivals and departures (related to their frequencies), but other probability expressions may be used for describing said behaviour, which may be more suitable depending on, for example, the specific behaviour of different users in different countries, or different environments, etc.

Also, it has to be noted that the used probability distribution functions comprise frequencies (either arrival or departure) which, since they are related to changing behaviours of usage of a vehicle, they are dependant on time, and therefore, the probability distribution function may change over time, as long as arrival or departure frequencies change.

According to a further embodiment of the invention, the time to denial of service is obtained by applying the Monte Carlo method a plurality of times, and obtaining an average value of the time to denial of service.

According to another embodiment, the calculation of the denial of service of the parking lots of step g) is specifically performed by using a Monte Carlo method, assigning an exponential distribution to the probability corresponding to the arrival and departure frequency, after the time to denial of service, during a predetermined period of time.

The Monte Carlo methods are a plurality of methods which apply stochastic techniques--meaning they are based on the use of random numbers and probability statistics to investigate a specific problem. In this case, a Monte Carlo method is used for generating random numbers based on the probability according to the arrival and departure frequency of vehicles in a specific parking lot. This way, the random numbers may be useful for representing the time of arrivals and departures of each vehicle from a parking lot, allowing the system to calculate the time to denial of service of each parking lot, bearing in mind the initial amount of vehicles found in the parking lot.

This way, the time to denial of service is calculated by simulating arrivals and departures of a parking lot, generating random numbers which represent the times of arrivals and times of departures of the parking lot, and when the parking lot is full of empty during the simulation, the time to denial of service is determined (either the time when the parking lot is full or when the parking lot is empty).

Also, the Monte Carlo method may be used for the calculation of the denial of service parameter, said parameter being the denial of service ratio of a parking lot during a determined period of time (depending on the type of denial, i.e. If the time to denial of service is referred to a case where the parking lot is full and no vehicle can be parked by a user, or the parking lot is empty and no bicycle can be retrieved by a user).

This is performed, more precisely, by obtaining the denial of service applying the Monte Carlo method, simulating arrivals and departures on a parking lot by random numbers (which represent times of arrival and times of departure), said random numbers related to the arrival and departure frequencies, and determining the denial of service for a simulated period of time, said period of time after the time to denial of service is past.

According to a further embodiment, the denial of service is obtained by applying the Monte Carlo method a plurality of times, and obtaining an average value of the denial of service.

In this case, the denial of service may be obtained several times for a plurality of simulations (as described above, by applying the Monte Carlo method), and an average value may be used as the denial of service of a specific parking lot.

This way, an aproximation of the denial of service and the time to denial of service is achieved, which is more similar to a realistic behaviour of the users.

According to a second aspect of the invention, a system for obtaining a route for restocking vehicles of a vehicle fleet is provided, said fleet comprising a plurality of parking lots, each lot comprising a plurality of parking slots, and further comprising a restocking vehicle for transporting vehicles of the fleet, the system comprising: means for obtaining the amount of parking lots of the vehicle fleet; means for obtaining the location of said parking lots; means for obtaining the arrival and departure frequency of each parking lot; means for obtaining the the available parking slots of each parking lot; means for calculating the time to denial of service of each parking lot, based on the amount of available parking slots of each parking lot and the arrival and departure frequency of each parking lot; means for calculating a plurality of possible routes of the restocking vehicle for restocking vehicles, the routes comprising the parking lots, using the obtained locations of each parking lot; means for calculating the denial of service of the parking lots comprised in the calculated routes, over a predetermined period of time; means for calculating the global denial of service for each calculated route, using the calculated denial of service of the parking lots and the calculated time to denial of service of each parking lot; and means for selecting a route for restocking vehicles from the calculated routes, among the ones which have a global denial of service below a predetermined level of denial of service.

According to another aspect, the invention provides a computer program comprising program instructions that run on a computer system to perform the method for obtaining a route for restocking vehicles of a vehicle fleet.

This computer program can be stored in physical storage media, such as a recording media, a computer memory or a read-only memory, or can be transported by a carrier wave, such as electrical or optical.

### PREFERRED EMBODIMENT OF THE INVENTION

According to the present preferred embodiment of the invention, the vehicle fleet is a bicycle fleet, and a renting service allows the users to use a bicycle taking it from among one of a plurality of parking lots, the parking lots comprising a plurality of parking slots wherein the bicycles are parked, and returning said bicycle within a period of time to another or the same parking lot. Therefore, according to the preferred embodiment of the present invention, a method for obtaining a route for restocking bicycles of a bicycle fleet, said fleet comprising a restocking vehicle for transporting bicycles of the fleet, such as a van, the method comprising the steps of:
1) Obtaining the amount of parking lots of the bicycle fleet;
2) Obtaining the location of said parking lots, the arrival and departure frequency, and the amount of available parking slots for each parking lots;
3) Calculating the time to denial of service of each parking lot, based on the amount of available parking slots of each parking lot, the arrival and departure frequency of each parking lot, a statistical usage parameter from a prior period of time and a prediction of statistical usage of a future period of time;
4) Obtaining an estimated time for transporting a bicycle with the restocking vehicle, from each parking lot to the other parking lots;
5) Calculating a plurality of possible routes of the restocking vehicle for restocking bicycles, the routes comprising the parking lots, using the obtained locations of each parking lot;
6) Calculating the denial of service of the parking lots comprised in the calculated routes, over a predetermined period of time;
7) Calculating the global denial of service for each calculated route, using the calculated denial of service of the parking lots, the obtained estimated time for transporting a bicycle, and the calculated time to denial of service of each parking lot;
8) Selecting the route for restocking bicycles from the calculated routes having a lowest global denial of service.

Whenever a driver of a restocking vehicle may want to know a route to be performed by the restocking vehicle, he may, for example, request one through a mobile terminal such as a PDA or a mobile phone, which may send a request to a central server. Then, the above described method may be performed by the central server, which may obtain information about all the parking lots of the fleet, their locations, the amount of parking slots of each parking lot, and updated information of how many available parking slots comprises each parking lot. Therefore, the central server obtains said information and, based on it and a historical account of usage of the fleet comprised in a database connected to the server, it further obtains the time to denial of service of each parking lot, obtaining first the arrival and departure frequencies of the parking lot.

The information from the historical account is used for obtaining the arrival and departure frequency, combined with information regarding specific situations which may affect the usage of a specific parking lot (that is, both frequencies), and which will help to obtain a more accurate time to denial of service for each parking lot.

Said information may be, for example, information regarding the meteorolgy of the place where the parking lot is located (rain, night time, period of the year, which may be colder or hotter, therefore affecting the usage of the bicycles, etc), the hour of the day (certain time frames may be more likely to have more users, or more departures or arrivals, depending on where the parking lot is located, etc.), or the traffic congestion (if there is no traffic congestion, maybe the usage is higher than when there are a lot of vehicles in the streets), plus others.

When the arrival and departure frequencies are obtained (based on all the previously described variables), a single simulation is performed (following the Monte Carlo methodology) wherein a plurality of cases of arrivals and departures are simulated with random numbers (according to a time of arrival and a time of departure), said random numbers being related to the arrival and departure frequencies. That way, whenever the parking lot is empty or full while simulating arrivals and departures, the time to denial of service is determined.

Normally, several single simulations are performed on a certain parking lot obtaining a plurality of times to denial of service over the same lot, and then, the time to denial of service of the parking lot is determined as an average of said obtained plurality of times.

Also, said arrival and departure frequencies may be related to a probability distribution function of arrival and a probability distribution function of departure, which define the probability that an arrival or departure occurs in a given instant of time. Said probabilites would be described as being an exponential distribution function, but wherein the frequencies (both arrival and departure) may change over time, since said frequencies are related to the arrivals and departures performed by users, which may change over time.

Furthermore, the obtaining of an estimated time for transporting a bicycle from one parking lot to another is performed in such a way that, from the start of the route performed by the restocking vehicle, the time of arrival of the restocking vehicle to each parking lot is known, and therefore, a number of denied services (the denial of service) may be obtained for each parking lot of the route.

For example, in a situation where:
- a restocking vehicle has an estimated time of transportation between parking lot A and parking lot B of three minutes;
- parking lot B has a time to denial of service (in which the parking lot will be full and no bicycle will be able to park) of two minutes;
- parking lot B has a constant arrival frequency of two users per minute and a constant departure frequency of one user each 5 minutes.

When the restocking vehicle would arrive, theoretically (being an approximation, not using the Monte Carlo method previously described), parking lot B would have had a denial of service of two users (one minute has past after the time to denial of service, at a rate of two users per minute).

The estimated times of transportation may be obtained by a simple approximation of time taking into account the distance and location of each parking lot (which is a faster calculation), or in a more complex way, using specific street-routes, information about the traffic congestion of the route between the two parking lots and other information, to determine a specific and more accurate estimated time for the restocking vehicle to go from each parking lot to the next on its route.

Afterwards, all the possible combinations of orders of the parking lots are calculated, in such a way that all the possible routes comprising the obtained parking lots are obtained.

The amount of possible combinations of orders which lead to the obtained possible routes should be calculated over a maximum amount of parking lots, which, in this case, is usually eight parking lots, since the calculation time increases a lot when using more parking lots, affecting the overall performance time of the method according to the present invention. Furthermore, since the route is to be driven by a restocking vehicle, and the vehicle fleet is constantly changing, the route should have a low amount of parking lots, so the calculations are still valid by the time the restocking vehicle arrives to the last parking lots, that is, the amount of vehicles found in the last parking lots hasn't changed drastically and the calculations are still valid for them.

Then, the denial of service of each parking lot of each route is calculated, by applying, in a similar way as in the calculation of the time to denial of service, a Monte Carlo method a plurality of times, wherein arrivals and departures are simulated by generating random numbers which represent times of arrival and departure over a period of time, said period of time after the time to denial of service has past.

When all the possible routes are calculated and each denial of service is calculated for each parking lot of each possible route, the global denial of service of each route is calculated and a route is selected among the calculated routes with the lowest denial of service.

However, steps 7) and 8) may be performed two times, in such a way that a first time a pre-calculation of the global denial of service is performed, wherein the pre-calculation is based on the calculated denial of service of each parking lot, the obtained estimated time for transporting a bicycle, and the calculated time to denial of service of each parking lot.

After this first pre-calculation, which does not require a lot of calculation time, a preselection of a plurality of routes is performed, wherein said routes have a global denial of service under a predetermined level of global denial of service.

Then, a second calculation of the global denial of service is performed over the preselected routes, this time further taking into account the number of bicycles the restocking vehicle has to leave and the number of bicycles that it has to pick-up for each parking lot.

This way, the calculated global denial of service for each preselected possible route is more accurate (although the calculation is slower than the first pre-calculation), and the route with the lowest global denial of service is finally selected among these late precalculated routes.

Also, besides the restocking route, an optimum number of available parking slots to be left in the parking lot is obtained for each parking lot of each precalculated possible route. This way, a user requesting a route for restocking vehicles may also obtain said information, being useful for lowering the global denial of service of the obtained route for restocking, and, for example, for optimizing the space within the restocking vehicle, which has a limited amount of bicycles which it can carry inside.

By using this method, an optimal route for restocking bicycles of the bicycle fleet is obtained. This route may be requested by the driver of the restocking vehicle, before restocking any vehicle, to a central server through, for example, a mobile terminal.

The driver would identify himself and his location, transmitting said data to the central server, where an optimal route would be obtained and sent to the mobile terminal of the driver.

Along with the exact route of the restocking vehicle (which comprises the order of the parking lots to follow and, for example, the streets which the restocking vehicle would have to follow), the driver would also receive data which would specify the optimal amount of bicycles to be left or picked-up in each parking lot.

Although the present invention has been described in detail for purpose of illustration, it is understood that such detail is solely for that purpose, and variations can be made therein by those skilled in the art without departing from the scope of the invention.

Thus, while the preferred embodiments of the methods and of the systems have been described in reference to the environment in which they were developed, they are merely illustrative of the principles of the invention. Other embodiments and configurations may be devised without departing from the scope of the appended claims.

Further, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. Method for obtaining a route for restocking vehicles of a vehicle fleet, said fleet comprising a plurality of parking lots, each lot comprising a plurality of parking slots, and further comprising a restocking vehicle for transporting vehicles of the fleet, the method comprising the steps of:
a) Obtaining the amount of parking lots of the vehicle fleet;
b) Obtaining the location of said parking lots;
c) Obtaining the arrival and departure frequency of each parking lot;
d) Obtaining the the available parking slots of each parking lot;
e) Calculating the time to denial of service of each parking lot, based on the amount of available parking slots of each parking lot and the arrival and departure frequency of each parking lot;
f) Calculating a plurality of possible routes of the restocking vehicle for restocking vehicles, the routes comprising the parking lots, using the obtained locations of each parking lot;
g) Calculating the denial of service of the parking lots comprised in the calculated routes, over a predetermined period of time;
h) Calculating the global denial of service for each calculated route, using the calculated denial of service of the parking lots and the calculated time to denial of service of each parking lot;
i) Selecting a route for restocking vehicles from the calculated routes, among the ones which have a global denial of service below a predetermined level of denial of service.

2. Method according to claim 1, wherein the time to denial of service is calculated based on parameters corresponding to the statistical usage, from a prior period of time, of the vehicles for each parking lot.

3. Method according to claim 1 or 2, wherein the time to denial of service is calculated based on parameters corresponding to a prediction of the statistical usage of the vehicles for each parking lot, over a future period of time.

4. Method according to any of claims 1 to 3 further comprising step (j) of obtaining an estimated time for transporting at least one vehicle, from at least one parking lot to another, with the restocking vehicle, and wherein the calculating of the global denial of service of step (h) is further based on the obtained estimated time for transporting.

5. Method according to any of claims 1 to 4 wherein the calculation of the plurality of possible routes of step (f) is further based on the initial number of vehicles transported by the restocking vehicle before starting the route.

6. Method according to any of claims 1 to 5 wherein the calculation of the plurality of possible routes of step (f) is further based on the vehicles of the fleet left and picked-up in each parking lot during each route.

7. Method according to any of claims 1 to 6 wherein the calculation of the time to denial of service of step (e) is specifically performed by using a Monte Carlo method, assigning an exponential distribution to the probability corresponding to the arrival and departure frequency.

8. Method according to claim 7 wherein the time to denial of service is obtained by applying the Monte Carlo method a plurality of times, and obtaining an average value of the time to denial of service.

9. Method according to any of claims 1 to 8 wherein the calculation of the denial of service of the parking lots of step (g) is specifically performed by using a Monte Carlo method, assigning an exponential distribution to the probability corresponding to the arrival and departure frequency, after the time to denial of service, during a predetermined period of time.

10. Method according to claim 9 wherein the denial of service is obtained by applying the Monte Carlo method a plurality of times, and obtaining an average value of the denial of service.

11. Method according to any of claims 1 to 10 further comprising a step (k) of obtaining the amount of available parking slots to be left in each parking lot of each possible calculated routes in step (f).

12. System for obtaining a route for restocking vehicles of a vehicle fleet, said fleet comprising a plurality of parking lots, each lot comprising a plurality of parking slots, and further comprising a restocking vehicle for transporting vehicles of the fleet, the system comprising: means for obtaining the amount of parking lots of the vehicle fleet; means for obtaining the location of said parking lots; means for obtaining the arrival and departure frequency of each parking lot; means for obtaining the the available parking slots of each parking lot; means for calculating the time to denial of service of each parking lot, based on the amount of available parking slots of each parking lot and the arrival and departure frequency of each parking lot; means for calculating a plurality of possible routes of the restocking vehicle for restocking vehicles, the routes comprising the parking lots, using the obtained locations of each parking lot; means for calculating the denial of service of the parking lots comprised in the calculated routes, over a predetermined period of time; means for calculating the global denial of service for each calculated route, using the calculated denial of service of the parking lots and the calculated time to denial of service of each parking lot; and means for selecting a route for restocking vehicles from the calculated routes, among the ones which have a global denial of service below a predetermined level of denial of service.

13. A computer program product comprising program instructions for causing a computer to perform the method according to any of claims 1 to 11.

14. A computer program according to claim 13, embodied on storing means.

15. A computer program according to claim 13, carried on a carrier signal.
